# EUROPÄISCHE PATENTSCHRIFT

(11) **EP 3 840 966 B1**
(45) Veröffentlichungstag und Bekanntmachung des Hinweises auf die Patenterteilung: **03.05.2023**
(21) Anmeldenummer: 19748676.4
(22) Anmeldetag: 02.07.2019
(51) Int. Cl.: B60G 15/08, B60G 15/06, B60G 17/027

(54) **HÖHENVERSTELLBARES FEDER-DÄMPFERSYSTEM FÜR EIN FAHRZEUG**
HEIGHT-ADJUSTABLE SPRING-DAMPER SYSTEM FOR A VEHICLE
SYSTÈME D'AMORTISSEUR À RESSORT RÉGLABLE EN HAUTEUR CONÇU POUR UN VÉHICULE

(30) Priorität: 21.08.2018 DE 102018214041
(43) Veröffentlichungstag der Anmeldung: 30.06.2021
(73) Patentinhaber: Bayerische Motoren Werke Aktiengesellschaft, 80809 München (DE)
(72) Erfinder: SCHATZBERGER, Uwe, 84172 Buch (DE); FORSTER, Gerhard, 93059 Regensburg (DE); BRANDSTETTER, Siegfried, 84405 Dorfen (DE)
(86) Internationale Anmeldenummer: PCT/EP2019/067715
(87) Internationale Veröffentlichungsnummer: WO 2020/038636

(56) Entgegenhaltungen:
- EP-A1- 3 225 529
- EP-A2- 1 864 836
- DE-A1- 10 239 140
- DE-A1- 10 353 025
- DE-A1-102008 050 682
- DE-A1-102011 084 089

## Beschreibung

Die Erfindung betrifft ein höhenverstellbares Feder-Dämpfersystem für ein Fahrzeug zur voneinander getrennten Einstellung einer Fahrlage und eines Zuladungsausgleichs des Fahrzeugs, wobei das Fahrzeug insbesondere ein einspuriges Kraftfahrzeug bzw. ein Motorrad ist.

Bei Fahrzeugen, wie beispielsweise Motorrädern, hat das Niveau des Fahrzeugs (Fahrzeugniveau) einen großen Einfluss auf das Fahrverhalten und die Lenkgeometrie. Sowohl die Stabilität als auch die Handhabbarkeit (Handling) des Fahrzeugs sind stark von dem Fahrzeugniveau abhängig, wobei die Kraftfahrzeuge meist für ein vorbestimmtes Soll- Fahrzeugniveau ausgelegt sind.

Solche Fahrzeuge sehen in vielen Fällen eine Einstellbarkeit des Fahrzeugniveaus vor, die es ermöglicht, das Niveau des Fahrzeugs abzusenken oder zu erhöhen, um beispielsweise während der Fahrt auf dem Soll-Fahrzeugniveau zu sein. Durch die Einstellbarkeit des Fahrzeugniveaus soll dabei meist ein Zuladungsausgleich möglich sein, um ein zusätzlich auf das Fahrzeug wirkendes Gewicht, beispielsweise durch Gepäck oder Beifahrer (Sozius), welches dazu führt, dass das Fahrzeugniveau sinkt, auszugleichen.

Hinzukommt, dass insbesondere Fahrzeuge in einem höherpreisigen Segment eine zusätzliche Einstellbarkeit des Fahrzeugniveaus vorsehen, um das Fahrzeug in eine für die Fahrzeugsituation vorteilhafte Fahrlage zu bringen. Beispielsweise kann das Fahrzeugniveau in eine obere Fahrlage, die meist dem Soll- Fahrzeugniveau entspricht, angehoben werden um während der Fahrt Bodenfreiheit zu gewinnen und/oder das Fahrzeugniveau insbesondere bei einem Halten oder Bremsen des Fahrzeugs in eine untere Fahrlage abgesenkt werden, um dem Fahrer mit den Füßen ein Erreichen des Bodens zu erleichtern und dadurch eine erhöhte Standsicherheit zu bieten. Beim Anfahren oder ab vorbestimmten Geschwindigkeiten wird das Fahrzeug durch die Fahrlageneinstellung anschließend wieder auf die obere Fahrlage bzw. das Soll-Fahrzeugniveau angehoben.

Aus dem Stand der Technik ist bereits eine Vielzahl von verschiedenen höhenverstellbaren Feder-Dämpfersystemen für Fahrzeuge bekannt, welche in ihrer Höhe entlang ihrer Längsachse verstellbar sind. Meist ermöglichen diese Systeme jedoch entweder einen Zuladungsausgleich oder eine Fahrlageneinstellung, jedoch nicht beides.

Soll mithilfe eines solchen Systems sowohl die Einstellbarkeit der Fahrlage als auch ein Zuladungsausgleich möglich sein, wird bei bereits bekannten Vorrichtungen meist ein einzelner Hydraulikzylinder mit einem einzelnen darin angeordneten Kolben verwendet, was jedoch zu mehreren Problemen führt. Meist wird ein solcher technischer Zylinder in seine Längsrichtung angrenzend an eine Tragfeder oder einen Dämpferzylinder eines Feder-Dämpfersystems angeordnet, sodass sich die Bauhöhe des gesamt Systems deutlich erhöht. Darüber hinaus sind ein Zuladungsausgleich und eine dynamische, während der Fahrt veränderliche Fahrlage nur unter großem messund regelungstechnischem Aufwand reproduzierbar umsetzbar. Soll beispielsweise das Fahrzeugniveau bei einem Anhaltvorgang des Fahrzeugs abgesenkt werden, wird ein Teil der Hydraulikflüssigkeit aus einem Teil des technischen Zylinders gepumpt. Bei einem späteren Anheben auf das vorherige Niveau, muss die exakt gleiche Menge an Hydraulikflüssigkeit zurück gepumpt werden. Eine einfache Zeitsteuerung zum Pumpen der Hydraulikflüssigkeit ist nicht möglich, da der Druck und damit das Strömungsvolumen der aus dem technischen Zylinders gepumpten Flüssigkeit von vielen unterschiedlichen Faktoren, wie beispielsweise Zuladung oder Außentemperatur abhängig ist. Die zum Erreichen eines reproduzierbaren Fahrzeugniveaus notwendigen mess- und regelungstechnischen Vorrichtungen sind jedoch teuer und fehleranfällig.

Ein höhenverstellbares Feder-Dämpfersystem für ein Kraftfahrzeug ist beispielsweise aus der Schrift EP 1 864 836 A2 bekannt. Sie offenbart den Oberbegriff des Anspruchs 1 und lehrt, dass zwei zu einem Dämpferzylinder konzentrische Ringzylinder in Reihe zueinander angeordnet sind, welche zur voneinander getrennten Einstellung einer Fahrlage und eines Zuladungsausgleichs des Fahrzeugs ansteuerbar sind. Der Erfindung liegt deshalb die Aufgabe zugrunde, ein höhenverstellbares Feder-Dämpfersystem bereitzustellen, mit welchem die Höhe des Feder-Dämpfersystems eines Fahrzeugs zur Einstellbarkeit der Fahrlage und zur Einstellung eines Zuladungsausgleichs des Fahrzeugs reproduzierbar und mit hoher Wiederholgenauigkeit möglich ist, wobei das höhenverstellbare Feder-Dämpfersystem zugleich bauraumsparend, kostengünstig und robust sein soll.

Diese Aufgabe wird durch die Merkmalskombination gemäß Patentanspruch 1 und 8 gelöst.

Erfindungsgemäß wir ein höhenverstellbares Feder-Dämpfersystem für ein Fahrzeug zur voneinander getrennten Einstellung einer Fahrlage des Fahrzeugs und eines Zuladungsausgleichs gemäß Anspruch 1 vorgeschlagen. Das Feder-Dämpfersystem umfasst einen Dämpferzylinder und eine Tragfeder. Darüber hinaus weist das Feder-Dämpfersystem einen ersten Ringzylinder mit einem darin verschiebbar angeordneten ersten Ringkolben und einen zweiten Ringzylinder mit einem darin verschiebbar angeordneten zweiten Ringkolben auf. Der erste Ringkolben bestimmt in dem ersten Ringzylinder eine erste Arbeitskammer mit einem ersten Arbeitsvolumen und der zweite Ringkolben bestimmt in dem zweiten Ringzylinder eine zweite Arbeitskammer mit einem zweiten Arbeitsvolumen. Darüber hinaus ist der erste Ringzylinder mit dem ersten Ringkolben ausgebildet, durch eine Änderung des ersten Arbeitsvolumens die Tragfeder und den Dämpferzylinder relativ zueinander entlang einer Längsachse des Dämpferzylinders zu verschieben und eine Länge des Feder-Dämpfersystems entlang der Längsachse zur Einstellung der Fahrlage des Fahrzeugs einzustellen. Ferner ist der zweite Ringzylinder mit dem zweiten Ringkolben ausgebildet, durch eine Änderung des zweiten Arbeitsvolumens die Tragfeder und den Dämpferzylinder relativ zueinander entlang der Längsachse des Dämpferzylinders zu verschieben und die Länge des Feder-Dämpfersystems entlang der Längsachse zur Einstellung des Zuladungsausgleichs des Fahrzeugs einzustellen.

Das höhenverstellbare Feder-Dämpfersystem ist insbesondere an einer Fahrzeughinterachse eines Motorrads vorgesehen.

Eine alternative Ausführungsform sieht vor, dass der Dämpferzylinder ein Führungszylinder ist, der selbst keine Schwingungsdämpfenden Eigenschaften hat. Beispielsweise kann dadurch die Einstellbarkeit der Fahrlage und des Zuladungsausgleichs getrennt von einer Schwingungsdämpfung vorgenommen werden, wobei an einer Hinterachse des Fahrzeugs dann ein Feder-Dämpfersystem mit einem Dämpferzylinder mit schwingungsdämpfenden Eigenschaften und ein Feder-Dämpfersystem mit einem Führungszylinder ohne schwingungsdämpfende Eigenschaften vorgesehen ist.

Bei einer vorteilhaften Ausführungsform der Erfindung ist vorgesehen, dass die Tragfeder, der erste Ringzylinder, der erste Ringkolben, der zweite Ringzylinder und der zweite Ringkolben konzentrisch um die Längsachse des Dämpferzylinders angeordnet sind. Die Längsachse ist zudem konzentrisch zu dem Dämpferzylinder ausgerichtet.

Um die Länge des Feder-Dämpfersystems entlang der Längsachse gering zu halten und dadurch eine günstige Bauform zu erzielen sieht eine ebenfalls vorteilhafte Ausführungsform vor, dass der erste Ringzylinder und der erste Ringkolben sowie der zweite Ringzylinder und der zweite Ringkolben ringförmig um den Dämpferzylinder angeordnet sind. Je nach Ausführungsform sind entweder der erste und zweite Ringzylinder zu dem Dämpferzylinder ortsfest oder zumindest der erste oder zweite Ringkolben. Um ein Austreten von Fluid aus den Ringzylindern bzw. aus der ersten oder zweiten Arbeitskammer zu verhindern ist hierbei ferner vorgesehen, dass der erste Ringkolben zu dem ersten Ringzylinder und dem Dämpferzylinder sowie der zweite Ringkolben zu dem zweiten Ringzylinder und dem Dämpferzylinder abgedichtet sind. Eine jeweilige Ausführungsform kann hierbei auch vorsehen, dass der erste Ringzylinder gegenüber dem zweiten Ringzylinder und/oder der zweite Ringzylinder gegenüber dem ersten Ringzylinder abgedichtet sind/ist. Eine solche Abdichtung ist beispielsweise über an den Ringkolben angeordnete Dichtungsringe herstellbar. Wird beispielsweise der erste oder zweite Ringzylinder an dem Dämpferzylinder fixiert, kann die Abdichtung auch über eine Schweißnaht oder dergleichen hergestellt werden.

Für die jeweils entlang der Längsachse verschiebbare Komponente (erster und zweiter Ringzylinder oder erster und zweiter Ringkolben) muss zur Führung entlang der Längsachse eine geeignete Gleitfläche zur Verfügung gestellt werden. Die Gleitfläche kann beispielsweise von einer Außenfläche des Dämpferzylinder gebildet werden oder beispielsweise auch eine um den Dämpferzylinder angeordnete Hülse sein.

Zur Verstellung und Steuerung des ersten und zweiten Ringkolbens bzw. des ersten und zweiten Ringzylinders sowie der damit einhergehenden Änderung des ersten und zweiten Arbeitsvolumens umfasst das erfindungsgemäße Feder-Dämpfersystem zudem einen Fluidtank, eine Fluidpumpe und ein Pumpenventil. Die Fluidpumpe ist ausgebildet, abhängig von einer Ventilstellung des Pumpenventils und einer Förderrichtung der Fluidpumpe, ein Fluid aus dem Fluidtank in die erste oder die zweite Arbeitskammer sowie aus der ersten oder der zweiten Arbeitskammer in den Fluidtank zu pumpen und das erste Arbeitsvolumen und das zweite Arbeitsvolumen zu ändern. Die Fluidpumpe sieht dabei vorzugsweise zwei Förderrichtungen vor, zwischen welche die Fluidpumpe umgeschaltet werden kann, wobei eine wechselnde Förderrichtung auch durch eine Fluidpumpe mit fester Förderrichtung und zusätzliche Ventile erzielt werden kann.

Ferner ist erfindungsgemäß vorgesehen, dass das Pumpventil zumindest eine erste und eine zweite Ventilstellung hat. In der ersten Ventilstellung kann Fluid aus der ersten Arbeitskammer in den Tank oder aus dem Tank in die erste Arbeitskammer gepumpt werden. Insbesondere durch die Verwendung eines Rückschlagventils, kann jedoch die Förderung aus der ersten Arbeitskammer durch die Fluidpumpe in den Tank auch gesperrt sein, wobei dann ein alternativer Strömungsweg für das Fluid vorgesehen ist. In der zweiten Ventilstellung kann Fluid aus der zweiten Arbeitskammer in den Tank oder aus dem Tank in die zweite Arbeitskammer gepumpt werden. Darüber hinaus kann auch eine dritte Ventilstellung vorgesehen werden, in welche einer Sperrstellung entspricht, in welcher der Fluidfluss durch das Pumpenventil gesperrt ist.

Vorteilhaft ist insbesondere ein möglichst schnelles Absenken auf ein unteres Fahrzeugniveau. Daher sieht eine weitere Ausbildungsalternative ein Absenkventil zur Schnellabsenkung vor. Das Absenkventil weist eine Durchlass- und eine Sperrstellung auf, mit welchem das Fluid aus der ersten oder zweiten Arbeitskammer, die Fluidpumpe überbrückend, in den Fluidtank leitbar ist. Durch den auf die jeweilige Arbeitskammer wirkenden Druck wird das Fluid durch da Absenkventil direkt in den Tank gedrückt. Hierfür kann zudem ein Rückschlagventil vorgesehen sein, welches den Fluidfluss durch die Fluidpumpe sperrt. Alternativ kann jedoch auch ein Fluidfluss durch die Fluidpumpe möglich sein, so dass das Fluid durch das Absenkventil und die Fluidpumpe aus der Arbeitskammer in den Tank leitbar ist.

Insbesondere bei einer Ausführungsform mit Absenkventil und Rückschlagventil ist zudem vorteilhaft, dass keine Sperrstellung des Pumpenventils benötigt wird, da das Pumpenventil in einer Stellung die zweite Arbeitskammer bereits absperrt und ein Rückfluss aus der ersten Arbeitskammer in den Tank durch das Rückschlagventil und ein in seiner Sperrstellung geschaltetes Absenkventil ebenfalls gesperrt ist. Eine Kombination aus Rückschlagventil und Absenkventil ermöglicht dadurch ein schnelles Absenken bzw. ein schnelles Verschieben entlang der Längsachse und ersetzt zugleich eine Sperrstellung des Pumpenventils, in welcher sowohl die erste als auch die zweite Arbeitskammer strömungstechnisch gesperrt sind.

Darüber hinaus kann das Feder-Dämpfersystem Fluidkanäle bzw. Fluidleitungen zur fluid- bzw. strömungstechnischen Verbindung der fluidtechnischen Komponenten wie Fluidtank, Fluidpumpe, Pumpenventil, Absenkventil, der ersten und zweiten Arbeitskammer sowie eventuell vorhandene Speicherkammern umfassen.

Aus Sicherheitsgründen ist bei einer vorteilhaften Ausbildungsvariante des Feder-Dämpfersystems vorgesehen, dass das Absenkventil eine Rückstellfeder zur Federrückstellung aufweist und in einem unbetätigten Zustand in die Durchlassstellung federrückgestellt ist bzw. in anderen Worten eine Durchlassruhestellung hat. Dadurch wird sichergestellt, dass bei einem Ausfall der Spannungsversorgung oder einem Fehler der Steuerung das Absenkventil in Durchlassstellung gestellt wird, das Fluid aus der Arbeitskammer in den Tank gedrückt wird und das Fahrzeugniveau in die untere Fahrlage absinkt.

Eine vorteilhafte Ausführung des Feder-Dämpfersystem sieht vor, dass der erste Ringzylinder und der zweite Ringzylinder integral miteinander ausgebildet sind und eine gemeinsamen Zylinderkammer bestimmen, in welcher der erste Ringkolben und der zweite Ringkolben angeordnet sind. Vorzugsweise ist der gemeinsame Zylinder an dem Dämpferzylinder fixiert, so dass der erste und zweite Ringkolben in dem gemeinsamen Zylinder und gegenüber dem Dämpferzylinder entlang der Längsachse des Dämpferzylinders verschiebbar sind.

Die von dem ersten und zweiten Ringkolben in dem integral miteinander ausgebildeten Ringzylinder bestimmte erste und zweite Arbeitskammer stehen dabei nicht in unmittelbaren Kontakt miteinander.

Um die Arbeitskammern in einem solchen Feder-Dämpfersystem bzw. die Verschiebbarkeit der Ringkolben in dem integral ausgebildeten Ringzylinder zu begrenzen, sieht eine vorteilhafte Variante vor, dass die jeweilige Verschiebbarkeit des ersten Ringkolbens und des zweiten Ringkolbens in der Zylinderkammer durch Kolbenanschläge begrenzt ist, die von dem ersten und/oder zweiten Ringzylinder ausgebildet oder in ihrer Position relativ zu diesen fixiert sind. Die Kolbenanschläge bzw. Anschläge können beispielsweise durch Innen- oder Außensicherungsringe gebildet werden, welche in dafür ausgebildete Nuten eingesetzt sind, die beispielsweise an einer Außenfläche des Dämpferzylinders oder an einer Innenfläche des ersten oder zweiten Ringzylinders ausgebildet sind.

Erfindungsgemäß ist ferner vorgesehen, dass der erste Ringkolben in dem ersten Ringzylinder eine erste Speicherkammer mit einem ersten Speichervolumen bestimmt und der zweite Ringkolben in dem zweiten Ringzylinder eine zweite Speicherkammer mit einem zweiten Speichervolumen bestimmt. Ferner bilden die erste Speicherkammer und/oder die zweite Speicherkammer den Fluidtank, wobei ein erstes Zylindervolumen aus dem erstem Arbeitsvolumen und dem ersten Speichervolumen sowie ein zweites Zylindervolumen aus dem zweiten Arbeitsvolumen und dem zweiten Speichervolumen jeweils konstant sind. Dabei wird ein gemeinsamer Fluidtank durch zwei fluidtechnisch voneinander getrennte Speicherkammern ersetzt. Die Fluidsysteme des ersten Ringzylinders und des zweiten Ringzylinders sind strömungstechnisch dadurch im Wesentlichen vollständig getrennt, wobei das Fluid in beiden Systemen abhängig von der Pumpenventilstellung von der Fluidpumpe förderbar ist. Das Fluid kann also beispielsweise nicht von dem ersten Arbeitsvolumen in die zweite Speicherkammer fließen.

Ein weiterer Aspekt der Erfindung richtet sich zudem auf ein einspuriges Fahrzeug, insbesondere ein Motorrad, mit einem erfindungsgemäßen Feder-Dämpfersystem an einer Hinterachse des Fahrzeugs zur Fahrlageneinstellung des Fahrzeugs und zum Ausgleich einer auf das Fahrzeug wirkenden Zuladung.

Die vorstehend offenbarten Merkmale sind beliebig kombinierbar, soweit dies technisch möglich ist und diese nicht im Widerspruch zueinander stehen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: ein erstes nicht erfindungsgemäßes höhenverstellbares Feder-Dämpfersystem in einer ersten Stellung;
- Fig. 2: ein erstes nicht erfindungsgemäßes höhenverstellbares Feder-Dämpfersystem in einer zweiten Stellung;
- Fig. 3: ein erstes nicht erfindungsgemäßes höhenverstellbares Feder-Dämpfersystem in einer dritten Stellung;
- Fig. 4: ein erstes nicht erfindungsgemäßes höhenverstellbares Feder-Dämpfersystem in einer vierten Stellung;
- Fig. 5: ein zweites höhenverstellbares Feder-Dämpfersystem in einer ersten Stellung;
- Fig. 6: ein zweites höhenverstellbares Feder-Dämpfersystem in der ersten Stellung;
- Fig. 7: ein zweites höhenverstellbares Feder-Dämpfersystem in einer zweiten Stellung;
- Fig. 8: ein zweites höhenverstellbares Feder-Dämpfersystem in einer dritten Stellung;
- Fig. 9: ein zweites höhenverstellbares Feder-Dämpfersystem in einer vierten Stellung;
- Fig. 10: ein drittes höhenverstellbares Feder-Dämpfersystem;
- Fig. 11: ein viertes höhenverstellbares Feder-Dämpfersystem.

Die Figuren sind beispielhaft schematisch. Gleiche Bezugszeichen in den Figuren weisen auf gleiche funktionale und/oder strukturelle Merkmale hin.

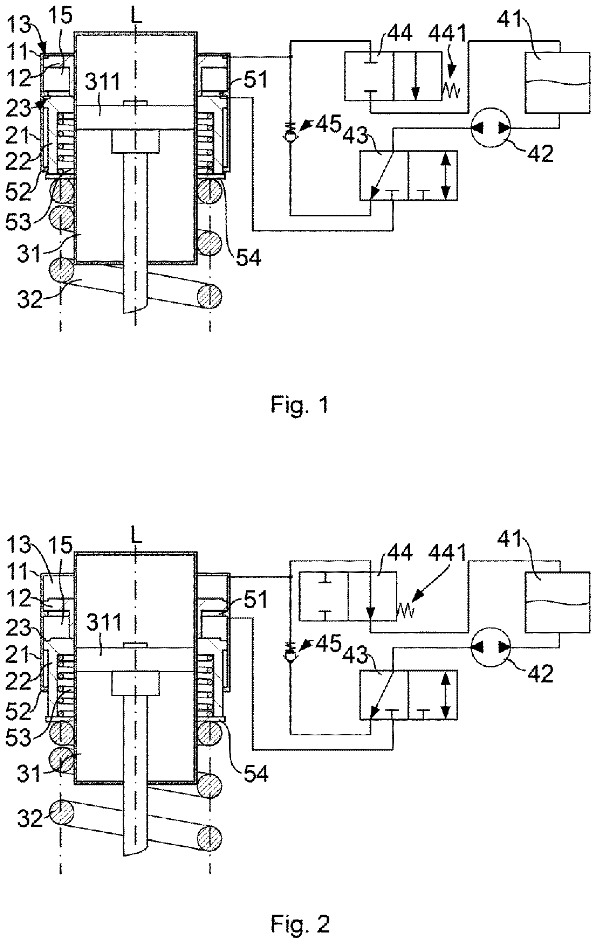

In Figur 1 ist eine erste Ausführungsform eines nicht erfindungsgemäßen höhenverstellbaren Feder-Dämpfersystems für ein Fahrzeug dargestellt. Der erste und der zweite Ringzylinder 11, 21 sind integral miteinander als ein gemeinsamer Zylinder ausgebildet und bestimmen im inneren des Zylinders einen gemeinsamen Aufnahmehohlraum, in welchem der erste und der zweite Ringkolben 12, 22 aufgenommen sind. In dem Zylinder aus dem ersten und zweiten Ringzylinder 11, 21 sind zwei ringförmige Anschläge 51, 52 angeordnet. Ein erster zwischen dem ersten und zweiten Ringkolben 12, 22 an dem Zylinder fixierter Anschlag 51 begrenzt die Verschiebbarkeit des ersten Ringkolbens 12 und ein zweiter, an einem offenen Ende des Zylinders angeordneter Anschlag 52 begrenzt die Verschiebbarkeit des zweiten Ringkolbens 22. Der Zylinder aus dem ersten und zweiten Ringzylinder 11, 21 sowie die darin aufgenommenen ersten und zweiten Ringkolben 12, 22 sind jeweils ringförmig ausgebildet und um einen Dämpferzylinder 31 des Feder-Dämpfersystems angeordnet. Der Zylinder aus ersten und zweiten Ringzylinder 11, 21 ist an dem Dämpferzylinder 31 fixiert und der erste und zweite Ringkolben 12, 22 sind in dem Zylinder entlang des Dämpferzylinders 31 verschiebbar. Der erste und der zweite Ringkolben 12, 22 sind jeweils gegenüber dem Dämpferzylinder 31 bzw. zu einer Außenfläche des Dämpferzylinders 31 und zu dem Zylinder aus ersten und zweiten Ringzylinder 11,21 bzw. zu einer Innenfläche des Zylinders durch nicht dargestellte Dichtmittel abgedichtet, so dass durch die Ringkolben 12, 22 jeweils eine Arbeitskammer 13, 23 in dem Zylinder bestimmt ist.

Der erste Ringkolben 12 bildet einen sich parallel zu der Längsachse L de Dämpferzylinders 31 erstreckenden Kragen aus, welcher ebenfalls ringförmig an dem Dämpferzylinder 31 anliegt. Einer zu der Tragfeder 32 gewandten Stirnseite des Kragens ist als Anlage- bzw. Anschlagsfläche für den zweiten Ringkolben 22 ausgebildet. Von dem zweiten Ringkolben 22 erstreckt sich ebenfalls ein Kragen in Richtung der Tragfeder 32, an dessen zu der Tragfeder 32 gewandten Stirnseite die Tragfeder 32 durch einen Federteller 54 gestützt anliegt. Durch den Kragen des zweiten Ringkolbens 22 wird von dem zweiten Ringkolben 22 zudem ein sich ringförmig um den Dämpferzylinder 31 erstreckender Hilfsfederraum gebildet, in welchem eine Hilfsfeder 53 angeordnet ist, welche ein mögliches Ablösen der Tragfeder 32 von dem zweiten Ringkolben verhindert werden soll, indem die Hilfsfeder 53 den Federteller 54 bei einer zu geringen Vorspannung der Tragfeder 32 zu der Tragfeder 32 hin drückt.

Der erste Ringkolben 11 dichtet einen Abschnitt des Aufnahmehohlraums des Zylinders ab und bildet dadurch eine erste Arbeitskammer 13, deren Arbeitsvolumen in Figur 1 minimal ist. Analog dazu dichtet auch der zweite Ringkolben 21 einen Abschnitt des Aufnahmehohlraums des Zylinders ab und bildet dadurch eine zweite Arbeitskammer 23 mit einem zweiten Arbeitsvolumen, welche bei dem dargestellten Ausführungsbeispiel zwischen dem ersten und dem zweiten Ringkolben 11, 21 angeordnet ist. Parallel zu dem Kragen des ersten Ringkolbens 12 ist ein mit der zweiten Arbeitskammer 23 verbundener Hohlraum 15 gebildet, dessen Volumen jedoch nicht zu dem zweiten Arbeitsvolumen zählt und dessen Volumen sich auch nicht ändert. Der Hohlraum 15 kann jedoch mit Fluid gefüllt sind. Alternativ könnte der Kragen des ersten Ringkolbens auch breiter und bis zu dem ersten Anschlag 51 ausgebildet sein, so dass das Volumen des Hohlraums 15 nicht mehr mit der zweiten Arbeitskammer 23 verbunden ist. Das zweite Arbeitsvolumen der zweiten Arbeitskammer 23 ist in Figur 1 ebenfalls minimal.

Da die erste und die zweite Arbeitskammer 13, 23 bzw. ihre jeweiligen Arbeitsvolumen jeweils minimal sind, ist die Länge bzw. Höhe des Feder-Dämpfersystems entlang der Längsachse L minimal, was einer unteren Fahrlage ohne Zuladung entspricht. Das Fahrzeug ist also auf keine Zuladung bzw. eine Fahrt ohne Sozius eingestellt und befindet sich auf seinem unteren Fahrniveau.

Zur Steuerung der Verschiebung des ersten und zweiten Ringkolbens 12, 22 ist in Figur 1 zudem ein zu dem höhenverstellbaren Feder-Dämpfersystem gehörendes Hydrauliksystem aus einem Fluidtank 41, einer Fluidpumpe 42 einem Pumpenventil 43 und einem Absenkventil 44 dargestellt. Die Komponenten des Hydrauliksystems sind über Fluidkanäle fluid- bzw. strömungstechnisch mit der ersten und zweiten Arbeitskammer 13, 23 verbunden.

Das Absenkventil 44 verfügt durch eine Rückstellfeder 441 über eine Federrückstellung, wobei das Absenkventil 44 in dem dargestellten Zustand angesteuert ist und sich in seiner Sperrstellung befindet. Ferner befindet sich das Pumpenventil 43 in einer Stellung, in welcher Fluid von dem Fluidtank 41 mit der Fluidpumpe 42 durch das Rückschlagventil 45 in die erste Arbeitskammer 13 förderbar ist. Der Anschluss des Pumpenventils 43 zu der zweiten Arbeitskammer 23 ist gesperrt. Vorteilhaft ist hierbei, dass die in Radialrichtung zu der Längsachse L außenliegenden Komponenten, also der gemeinsame Zylinder aus dem ersten und zweiten Ringzylinder 11, 21, gegenüber dem Dämpferzylinder 31 ortsfest sind. Wird ein solches Dämpfersystem an einem Fahrzeug verbaut, ist nicht zwingend eine zusätzliche Kapselung notwendig, um beispielsweise ein Eindringen von Schmutz zwischen die Komponenten zu verhindern oder eine Verletzungsgefahr zu reduzieren. Zudem werden auch die Anschlüsse für das zugehörige Hydrauliksystem nicht bewegt und sind ortsfest, wodurch keine flexiblen Schläuche als Fluidkanäle vorgesehen werden müssen, welche leicht beschädigt werden können.

Die in den Figuren 2 bis 4 dargestellten Feder-Dämpfersysteme entsprechen im Wesentlichen dem Feder-Dämpfersystem der Figur 1. Durch die Ventilstellungen, wie zu Figur 1 beschrieben, kann Fluid von der Fluidpumpe 42 aus dem Fluidtank 41 in die erste Arbeitskammer 13 gepumpt werden. Dadurch verschiebt sich der erste Ringkolben 12 entlang der Längsachse L in Richtung der Tragfeder 32. Der Kragen des ersten Ringkolbens 12 drückt bei der Verschiebung gegen den zweiten Ringkolben 22 und verschiebt diesen entlang der Längsachse L nach unten zu der Tragfeder 32. Der zweite Ringkolben 22 wird in Richtung des Federtellers 54 gedrückt und verschiebt diesen in Richtung der Tragfeder 32, so dass die Tragfeder 32 entlang der Längsachse L bewegt wird. Die zweite Arbeitskammer 23 wird ebenfalls entlang der Längsachse L zu der Tragfeder 32 verschoben, verändert jedoch ihr Arbeitsvolumen nicht. Der oberhalb des zweiten Ringkolbens 22 sich verschiebende Hohlraum 15 entspricht weiterhin dem zu dem Kragen parallele Hohlraum 15, der nicht zu der zweiten Arbeitskammer 23 gehört. Durch die Verschiebung der Tragfeder 32 wird auch der Dämpferkolben 311 des Dämpferzylinders 31 verschoben und die Länge des Feder-Dämpfersystems entlang der Längsachse L erhöht sich. Durch die Erhöhung der Länge wird das Fahrzeug ohne einen Zuladungsausgleich bzw. ohne eine Änderung der Zuladungseinstellung in seine obere Fahrlage gebracht, welche dem Soll-Fahrzeugniveau entspricht.

Das Absenkventil 44 ist in Figur 2 in seine Durchlassstellung verschoben, welche seiner Grund- bzw. Ruhestellung entspricht und in welcher Fluid aus dem ersten Arbeitsraum 13 in den Fluidtank 41 fließen kann. Allein durch auf den Dämpferzylinder 31 und die Tragfeder 32 entlang der Längsachse L wirkenden Kräfte wird der erste Ringkolben 12 über den zweiten Ringkolben bzw. über die zweite Arbeitskammer 23 entlang der Längsache L von der Tragfeder 32 weg verschoben, wodurch Fluid aus der ersten Arbeitskammer 13 durch das Absenkventil 44 in den Fluidtank 41 gepresst wird. Um den Fluidfluss durch das Pumpenventil 43 und die Fluidpumpe 42 zu sperren, ist das Rückschlagventil 45 vorgesehen, welches einen Fluidfluss verhindert. Bei einer alternativen Ausführungsform ohne Rückschlagventil 45 kann die Pumpe 42 zusätzlich Fluid aus der ersten Arbeitskammer 13 in den Fluidtank 41 fördern. Durch die in Figur 2 eingenommenen Ventilstellungen des Absenkventils 44 und des Pumpenventils 43 kann die Länge des Feder-Dämpfersystems entlang der Längsachse L reduziert und das Fahrzeug wieder abgesenkt werden. Das Anheben und Absenken erfolgt dabei ohne eine Beeinflussung des Zuladungsausgleichs über den zweiten Ringkolben 22 bzw. ohne eine Änderung des zweiten Arbeitsvolumens der zweiten Arbeitskammer 23.

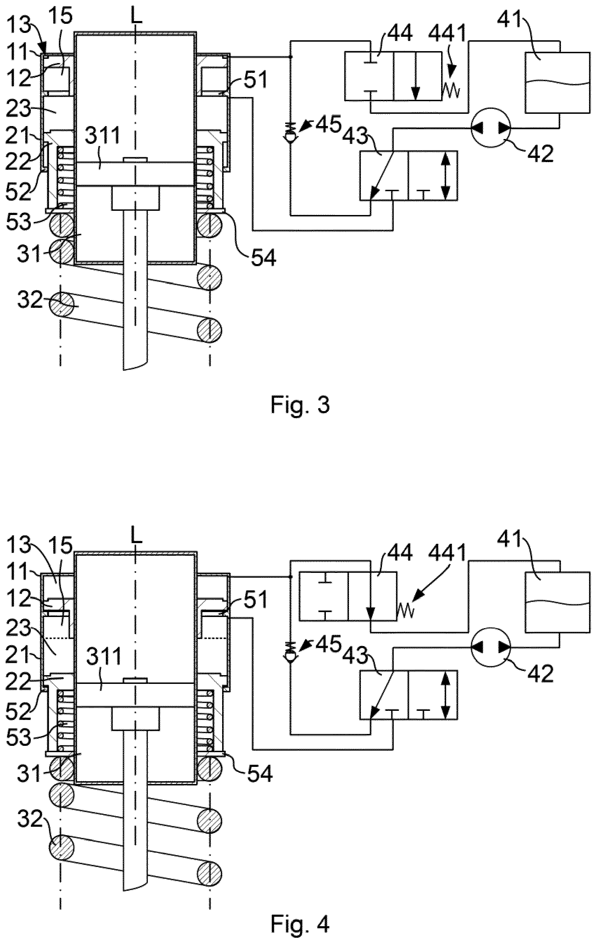

Das in Figur 3 dargestellte Feder-Dämpfersystem entspricht dem Feder-Dämpfersystem der Figur 1 und das in Figur 4 dargestellte Feder-Dämpfersystem entspricht dem Feder-Dämpfersystem in Figur 2. Jedoch ist bei den Feder-Dämpfersystemen der Figuren 3 und 4 jeweils der zweite Ringkolben 22 zum Ausgleich einer Zuladung entlang der Längsachse L zu der Tragfeder 32 hin verschoben. Die zweite Arbeitskammer 23 hat ein zweites Arbeitsvolumen, welches in den Figuren 3 und 4 identisch ist, so dass der Zuladungsausgleich durch den zweiten Ringkolben 22 von der Verschiebung des ersten Ringkolbens 12 und der damit einhergehenden Einstellung der Fahrlage unbeeinflusst bleibt. In Figur 4 ist die Begrenzung der zweiten Arbeitskammer 23 gestrichelt eingezeichnet, welche sich in den Figuren 1 und 3 jeweils mit einer unteren Kante des ersten Anschlags 51 deckt.

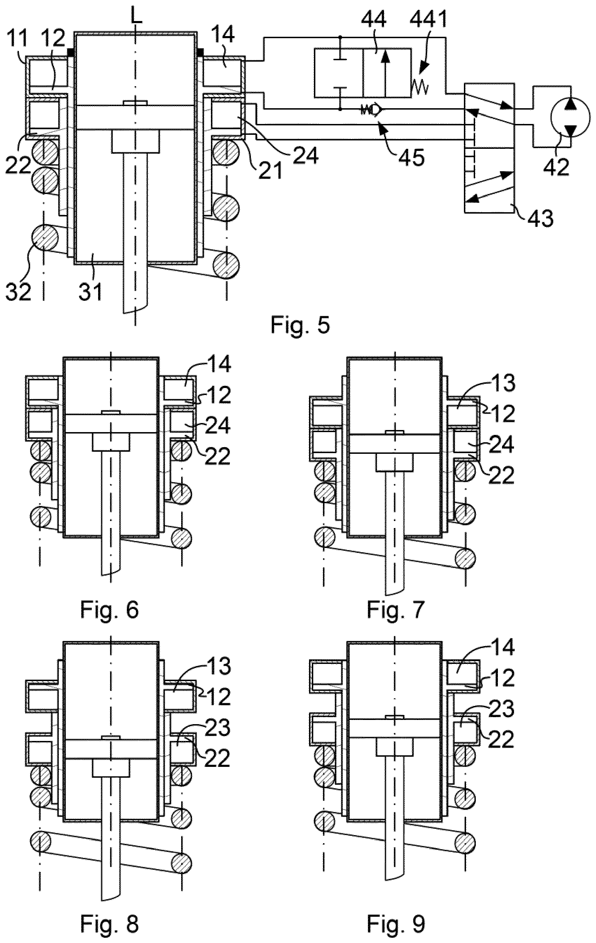

In Figur 5 ist eine von der Ausführungsvariante der Figuren 1 bis 4 abweichende Ausbildungsform des Feder-Dämpfersystems dargestellt. Der erste Ringkolben 12 ist an dem Dämpferzylinder 31 fixiert und gegenüber diesem nicht verschiebbar. Der erste Ringkolben 12 ist in einem ersten Ringzylinder 11 angeordnet, welcher entlang der Längsachse L verschiebbar ist. Der erste Ringkolben 12 unterteilt den Innenraum des ersten Ringzylinders 11 in eine Speicherkammer 14 und eine Arbeitskammer 13.

Der erste Ringkolben 12 bildet einen sich parallel zu der Längsachse L und ringförmig um den Dämpferzylinder 31 erstreckenden Kragen aus, der den Dämpferzylinder 31 hülsenförmig umgibt. Der zweite Ringkolben 22 bildet ebenfalls einen Kragen aus, welcher in einer Radialrichtung zu der Längsachse L an dem Kragen des ersten Ringkolbens 12 anliegt und an einer Stirnseite an dem ersten Ringzylinder 11 anliegt. Der zweite Ringkolben 22 ist entlang der Längsachse L verschiebbar. Der zweite Ringkolben 22 ist verschiebbar in dem zweiten Ringzylinder 21 aufgenommen, welcher gegenüber dem zweiten Ringkolben 22 entlang der Längsache L verschiebbar ist. Der zweite Ringkolben 22 bestimmt in dem zweiten Ringzylinder 21 eine zweite Speicherkammer 24 und eine zweite Arbeitskammer 23. Die Tragfeder 32 grenzt in dem gezeigten Ausführungsbeispiel unmittelbar an eine Stirnseite des zweiten Ringzylinders 21 an.

Die Summe aus dem ersten Arbeitsvolumen der ersten Arbeitskammer 13 und dem ersten Speichervolumen der ersten Speicherkammer 14 ist konstant und die Summe aus dem zweiten Arbeitsvolumen der zweiten Arbeitskammer 23 und dem zweiten Speichervolumen der zweiten Speicherkammer 24 ebenfalls konstant ist. Durch eine Änderung des ersten oder zweiten Arbeitsvolumens mittels des Hydrauliksystems des Feder-Dämpfersystems kann der jeweilige Ringzylinder 11, 21 verschoben werden.

Das Hydrauliksystem besteht hierbei aus einer Fluidpumpe 42, einem Pumpenventil 43, einem Absenkventil 44, einem Rückschlagventil 45 sowie den Fluidkanälen, welche die Komponenten mit der ersten und zweiten Arbeitskammer 13, 23 und der ersten und zweiten Speicherkammer 14, 24 verbinden. Die Speicherkammern 14, 24 ersetzen dabei den Tank, wodurch der Bauraumbedarf des Feder-Dämpfersystems sinkt. Das Funktionsprinzip ist zu dem Hydrauliksystem der Figuren 1 bis 4 identisch, wobei ein angepasstes Pumpenventil 43 eingesetzt ist.

Das Absenkventil 44 befindet sich in dem gezeigten Zustand in einer Sperrstellung und das Pumpenventil 43 in einer Stellung, in welcher das Fluid von der Fluidpumpe 42 aus der ersten Speicherkammer 14 in die erste Arbeitskammer 13 gepumpt werden kann. Die erste und die zweite Arbeitskammer 13, 23 haben in Figur 5 jeweils ihr minimales Volumen, wodurch die Höhe des Fahrzeugs bzw. die Länge der Feder-Dämpferanordnung entlang der Längsachse L minimal ist.

Wird von der Fluidpumpe 42 Fluid von der ersten Speicherkammer 14 in die erste Arbeitskammer 13 gepumpt, verschiebt sich der erste Ringzylinder 11 entlang der Längsachse L, wobei dadurch der zweite Ringkolben 22 über seine an dem ersten Ringzylinder 11 anstehenden Stirnfläche entlang der Längsachse L in Richtung der Tragfeder 32 verschoben wird. Dabei wird die Zuladungseinstellung, welche in Figur 5 auf minimale Zuladung eingestellt ist, nicht beeinflusst.

Die Figuren 6 bis 9 zeigen jeweils verschiedene Einstellungen des Feder-Dämpfersystems aus Figur 5, ohne das zugehörige Hydrauliksystem. Figur 6 entspricht der Einstellung aus Figur 5 und entspricht einer unteren Fahrlage ohne Zuladung. In Figur 7 ist das Feder-Dämpfersystem auf eine obere Fahrlage ohne Zuladung eingestellt. Die erste Arbeitskammer 13 hat hier ihr maximales Volumen und die zweite Arbeitskammer 23 weiterhin ein minimales Volumen. Der in Figur 8 dargestellte Zustand entspricht der oberen Fahrlage mit einer Zuladung. Sowohl die erste als auch die zweite Arbeitskammer 13, 23 hat jeweils ihr maximales Volumen. Bei Figur 9 ist das Feder-Dämpfersystem in einer unteren Fahrlage mit Zuladung eingestellt.

Zwischen der oberen und unteren Fahrlage kann jeweils ohne eine Beeinflussung der Zuladungseinstellung durch die zweite Arbeitskammer 23 gewechselt werden. Ebenso kann der Zuladungsausgleich mittels der zweiten Arbeitskammer 23 jeweils ohne die Beeinflussung der Fahrlage mittels der ersten Arbeitskammer 13 vorgenommen werden.

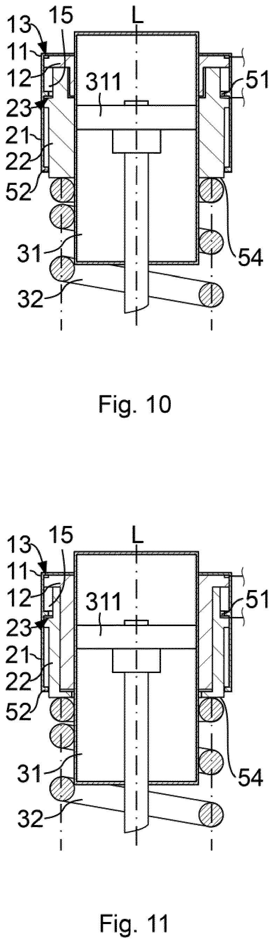

Die Figuren 10 und 11 stellen jeweils eine weitere alternative Ausführungsform mit einem an dem Dämpferzylinder 31 fixierten, aus dem ersten Ringzylinder 11 und dem zweiten Ringzylinder 21 gebildeten gemeinsamen Zylinder dar. Der erste Ringkolben 12 und der zweite Ringkolben 22 sind jeweils in dem gemeinsamen Zylinder entlang der Längsachse L verschiebbar. Beide Ausführungsformen weisen somit einen Aufbau und eine Funktion, ähnlich dem Aufbau und der Funktion der in den Figuren 1 bis 4 gezeigten Variante auf. Das zugehörige Hydrauliksystem kann daher auch identisch zu dem in den Figuren 1 bis 4 gezeigten Figuren sein, ist in den Figuren 10 und 11 jedoch nicht dargestellt. Der Federteller 54 wird zudem bei den beiden Varianten der Figuren 10 und 11 jeweils integral durch den zweiten Ringkolben 22 bzw. durch eine zu der Tragfeder 32 weisende Stirnfläche des zweiten Ringkolbens 22 gebildet.

Das in Figur 10 dargestellte Feder-Dämpfersystem unterscheidet sich im Wesentlichen dadurch, dass der zweite Ringkolben 22 einen sich zu dem ersten Ringkolben 12 erstreckenden Kragen ausbildet, mit welchem es in einem Zustand, in welchem das zweite Arbeitsvolumen der zweiten Arbeitskammer 23 minimal ist, an dem ersten Ringkolben 12 anliegt. Der von dem ersten Ringkolben 12 ausgebildete Kragen dient lediglich der Führung des ersten Ringkolbens 12 an dem Dämpferzylinder 31 und verschiebt nicht mehr den zweiten Ringkolben 22. Durch den von dem zweiten Ringkolben 22 ausgebildeten Kragen wird zudem das Volumen des Hohlraums 15 reduziert, der zu dem Kragen des ersten Ringkolbens 12 und des zweiten Ringkolbens 22 parallel angeordnet ist.

Der zweite Ringkolben 22, wie er in Figur 11 offenbart ist, bildet ebenfalls einen sich zu dem ersten Ringkolben 12 erstreckenden Kragen aus, wobei der zweite Ringkolben 22 nicht unmittelbar an dem Dämpferzylinder 31 anliegt und von ihm geführt wird, sondern an einem von dem ersten Ringkolben 12 ausgebildeten und sich parallel zu der Längsachse L erstreckenden Kragen anliegt. Die Führungsfläche für die Führung in Längsrichtung L des zweiten Ringkolbens 22 wird somit von dem ersten Ringkolben 12 bereitgestellt und die Führungsfläche für die Führung des ersten Ringkolbens 12 in Längsrichtung L von dem Dämpferzylinder 31. Der Vorteil dieser Ausführungsvariante liegt unter anderem darin, dass sowohl der erste Ringkolben 12, als auch der zweite Ringkolben 22 eine große Anlagefläche an ihre jeweilige Führungsfläche für die Führung in Längsrichtung L aufweisen.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

## Patentansprüche

1. Höhenverstellbares Feder-Dämpfersystem für ein Fahrzeug zur voneinander getrennten Einstellung einer Fahrlage und eines Zuladungsausgleichs des Fahrzeugs, mit einem Dämpferzylinder (31) und einer Tragfeder (32) sowie mit
einem ersten Ringzylinder (11) mit einem darin verschiebbar angeordneten ersten Ringkolben (12), der in dem ersten Ringzylinder (11) eine erste Arbeitskammer (13) mit einem ersten Arbeitsvolumen bestimmt,
und einem zweiten Ringzylinder (21) mit einem darin verschiebbar angeordneten zweiten Ringkolben (22), der in dem zweiten Ringzylinder (21) eine zweite Arbeitskammer (23) mit einem zweiten Arbeitsvolumen bestimmt,
wobei der erste Ringzylinder (11) mit dem ersten Ringkolben (12) ausgebildet ist, durch eine Änderung des ersten Arbeitsvolumens die Tragfeder (32) und den Dämpferzylinder (31) relativ zueinander entlang einer Längsachse (L) des Dämpferzylinders (31) zu verschieben und eine Länge des Feder-Dämpfersystems entlang der Längsachse (L) zur Einstellung der Fahrlage des Fahrzeugs einzustellen
und der zweite Ringzylinder (21) mit dem zweiten Ringkolben (22) ausgebildet ist, durch eine Änderung des zweiten Arbeitsvolumens die Tragfeder (32) und den Dämpferzylinder (31) relativ zueinander entlang der Längsachse (L) des Dämpferzylinders (31) zu verschieben und die Länge des Feder-Dämpfersystems entlang der Längsachse (L) zur Einstellung des Zuladungsausgleichs des Fahrzeugs einzustellen,
wobei
das Feder-Dämpfersystem einen Fluidtank (41), eine Fluidpumpe (42) und ein Pumpenventil (43) umfasst,
**dadurch gekennzeichnet, dass**
die Fluidpumpe (42) abhängig von einer Ventilstellung des Pumpenventils (43) und einer Förderrichtung der Fluidpumpe (42) ausgebildet ist, ein Fluid aus dem Fluidtank (41) in die erste oder die zweite Arbeitskammer (13, 23) sowie aus der ersten oder der zweiten Arbeitskammer (13, 23) in den Fluidtank (41) zu pumpen und das erste Arbeitsvolumen und das zweite Arbeitsvolumen zu ändern,
und wobei der erste Ringkolben (12) in dem ersten Ringzylinder (11) eine erste Speicherkammer (14) mit einem ersten Speichervolumen bestimmt und der zweite Ringkolben (22) in dem zweiten Ringzylinder (21) eine zweite Speicherkammer (24) mit einem zweiten Speichervolumen bestimmt
und die erste Speicherkammer (14) und die zweite Speicherkammer (24) den Fluidtank (41) bilden,
wobei ein erstes Zylindervolumen aus dem erstem Arbeitsvolumen (13) und dem erstem Speichervolumen (14) sowie ein zweites Zylindervolumen aus dem zweiten Arbeitsvolumen (23) und dem zweiten Speichervolumen (24) jeweils konstant ist.

2. Feder-Dämpfersystem nach dem vorhergehenden Anspruch, wobei die Tragfeder (32), der erste Ringzylinder (11), der erste Ringkolben (12), der zweite Ringzylinder (21) und der zweite Ringkolben (22) konzentrisch um die Längsachse (L) des Dämpferzylinders (31) angeordnet sind.

3. Feder-Dämpfersystem nach einem der vorhergehenden Ansprüche, wobei
der erste Ringzylinder (11) und der erste Ringkolben (12) sowie der zweite Ringzylinder (21) und der zweite Ringkolben (22) ringförmig um den Dämpferzylinder (31) angeordnet sind und
der erste Ringkolben (12) zu dem ersten Ringzylinder (11) und dem Dämpferzylinder (31) sowie der zweite Ringkolben (22) zu dem zweiten Ringzylinder (21) und dem Dämpferzylinder (31) abgedichtet sind.

4. Feder-Dämpfersystem nach einem der vorhergehenden Ansprüche, ferner umfassend
ein Absenkventil (44) zur Schnellabsenkung mit einer Durchlass- und einer Sperrstellung, mit welchem das Fluid aus der ersten oder zweiten Arbeitskammer (13, 23), die Fluidpumpe (42) überbrückend, in den Fluidtank (41) leitbar ist.

5. Feder-Dämpfersystem nach dem vorhergehenden Anspruch 4, wobei
das Absenkventil (44) eine Rückstellfeder (441) zur Federrückstellung aufweist und in einem unbetätigten Zustand in die Durchlassstellung federrückgestellt ist.

6. Feder-Dämpfersystem nach einem der vorhergehenden Ansprüche, wobei
der erste Ringzylinder (11) und der zweite Ringzylinder (21) integral miteinander ausgebildet sind und eine gemeinsame Zylinderkammer bestimmen, in welcher der erste Ringkolben (12) und der zweite Ringkolben (22) angeordnet sind.

7. Feder-Dämpfersystem nach dem vorhergehenden Anspruch, wobei
die jeweilige Verschiebbarkeit des ersten Ringkolbens (12) und des zweiten Ringkolbens (22) in der Zylinderkammer durch Kolbenanschläge (51, 52) begrenzt ist, die von dem ersten und/oder zweiten Ringzylinder (11, 21) ausgebildet oder in ihrer Position relativ zu diesen fixiert sind.

8. Einspuriges Fahrzeug mit einem Feder-Dämpfersystem nach einem der vorhergehenden Ansprüche an einer Hinterachse des Fahrzeugs zur Fahrlageneinstellung des Fahrzeugs und zum Ausgleich einer auf das Fahrzeug wirkenden Zuladung.

## Claims

1. Height-adjustable spring-damper system for a vehicle for setting a ride position and payload compensation of the vehicle separately from one another, having a damper cylinder (31) and a supporting spring (32), and also having
a first ring cylinder (11), which has a first ring piston (12) arranged displaceably therein and defining in the first ring cylinder (11) a first working chamber (13) with a first working volume,
and a second ring cylinder (21), which has a second ring piston (22) arranged displaceably therein and defining in the second ring cylinder (21) a second working chamber (23) with a second working volume,
wherein the first ring cylinder (11), with the first ring piston (12), is configured such that, through changing of the first working volume, displacement of the supporting spring (32) and the damper cylinder (31) relative to one another along a longitudinal axis (L) of the damper cylinder (31) and setting of a length of the spring-damper system along the longitudinal axis (L) for setting the ride position of the vehicle are realized,
and the second ring cylinder (21), with the second ring piston (22), is configured such that, through changing of the second working volume, displacement of the supporting spring (32) and the damper cylinder (31) relative to one another along the longitudinal axis (L) of the damper cylinder (31) and setting of the length of the spring-damper system along the longitudinal axis (L) for setting payload compensation of the vehicle are realized,
wherein the spring-damper system comprises a fluid tank (41), a fluid pump (42) and a pump valve (43),
**characterized in that**
the fluid pump (42) is configured such that, in a manner dependent on a valve position of the pump valve (43) and a delivery direction of the fluid pump (42), it pumps a fluid from the fluid tank (41) into the first or second working chamber (13, 23) and also from the first or second working chamber (13, 23) into the fluid tank (41), and it changes the first working volume and the second working volume,
and wherein the first ring piston (12) defines in the first ring cylinder (11) a first storage chamber (14) with a first storage volume, and the second ring piston (22) defines in the second ring cylinder (21) a second storage chamber (24) with a second storage volume,
and the first storage chamber (14) and the second storage chamber (24) form the fluid tank (41),
wherein a first cylinder volume made up of the first working volume (13) and the first storage volume (14) and a second cylinder volume made up of the second working volume (23) and the second storage volume (24) are in each case constant.

2. Spring-damper system according to the preceding claim, wherein
the supporting spring (32), the first ring cylinder (11), the first ring piston (12), the second ring cylinder (21) and the second ring piston (22) are arranged concentrically about the longitudinal axis (L) of the damper cylinder (31).

3. Spring-damper system according to either of the preceding claims, wherein
the first ring cylinder (11) and the first ring piston (12) and also the second ring cylinder (21) and the second ring piston (22) are arranged annularly around the damper cylinder (31), and
the first ring piston (12) is sealed off with respect to the first ring cylinder (11) and to the damper cylinder (31), and the second ring piston (22) is sealed off with respect to the second ring cylinder (21) and to the damper cylinder (31).

4. Spring-damper system according to one of the preceding claims, furthermore comprising
a lowering valve (44) for rapid lowering, with a pass-though position and a blocking position, by way of which the fluid is able to be conducted from the first or second working chamber (13, 23) into the fluid tank (41) in a manner bypassing the fluid pump (42) .

5. Spring-damper system according to preceding Claim 4, wherein
the lowering valve (44) has a return spring (441) for spring return and, in a non-actuated state, is moved into the pass-through position under the action of spring return.

6. Spring-damper system according to one of the preceding claims, wherein
the first ring cylinder (11) and the second ring cylinder (21) are formed integrally with one another and define a common cylinder chamber in which the first ring piston (12) and the second ring piston (22) are arranged.

7. Spring-damper system according to the preceding claim, wherein
the respective displaceability of the first ring piston (12) and the second ring piston (22) in the cylinder chamber is limited by piston stops (51, 52) which are formed by the first and/or second ring cylinder (11, 21) or are fixed in their position relative thereto.

8. Single-track vehicle having a spring-damper system according to one of the preceding claims at a rear axle of the vehicle for setting the ride position of the vehicle and for compensating for a payload acting on the vehicle.

## Revendications

1. Système d'amortisseur à ressort réglable en hauteur pour un véhicule servant au réglage d'une position de conduite et d'une compensation de la charge utile du véhicule séparément l'une de l'autre, comprenant un cylindre d'amortisseur (31) et un ressort de support (32) et comprenant
un premier cylindre annulaire (11) comprenant un premier piston annulaire (12) disposé de manière mobile dans celui-ci, lequel piston définit dans le premier cylindre annulaire (11) une première chambre de travail (13) présentant un premier volume de travail,
et un deuxième cylindre annulaire (21) comprenant un deuxième piston annulaire (22) disposé de manière mobile dans celui-ci, lequel piston définit dans le deuxième cylindre annulaire (21) une deuxième chambre de travail (23) présentant un deuxième volume de travail,
le premier cylindre annulaire (11) doté du premier piston annulaire (12) étant réalisé pour déplacer le ressort de support (32) et le cylindre d'amortisseur (31) l'un par rapport à l'autre le long d'un axe longitudinal (L) du cylindre d'amortisseur (31) par un changement du premier volume de travail et pour régler une longueur du système d'amortisseur à ressort le long de l'axe longitudinal (L) pour le réglage de la position de conduite du véhicule, et le deuxième cylindre annulaire (21) doté du deuxième piston annulaire (22) étant réalisé pour déplacer le ressort de support (32) et le cylindre d'amortisseur (31) l'un par rapport à l'autre le long de l'axe longitudinal (L) du cylindre d'amortisseur (31) par un changement du deuxième volume de travail et pour régler la longueur du système d'amortisseur à ressort le long de l'axe longitudinal (L) pour le réglage de la compensation de la charge utile du véhicule,
le système d'amortisseur à ressort comportant un réservoir de fluide (41), une pompe à fluide (42) et une soupape de pompe (43),
**caractérisé en ce que**
la pompe à fluide (42) est réalisée, en fonction d'une position de la soupape de pompe (43) et d'un sens de refoulement de la pompe à fluide (42), pour pomper un fluide hors du réservoir de fluide (41) dans la première ou la deuxième chambre de travail (13, 23) ainsi qu'hors de la première ou de la deuxième chambre de travail (13, 23) dans le réservoir de fluide (41) et pour changer le premier volume de travail et le deuxième volume de travail,
et le premier piston annulaire (12) définissant dans le premier cylindre annulaire (11) une première chambre d'accumulation (14) présentant un premier volume d'accumulation et le deuxième piston annulaire (22) définissant dans le deuxième cylindre annulaire (21) une deuxième chambre d'accumulation (24) présentant un deuxième volume d'accumulation,
et la première chambre d'accumulation (14) et la deuxième chambre d'accumulation (24) formant le réservoir de fluide (41),
un premier volume de cylindre constitué du premier volume de travail (13) et du premier volume d'accumulation (14) ainsi qu'un deuxième volume de cylindre constitué du deuxième volume de travail (23) et du deuxième volume d'accumulation (24) étant respectivement constants.

2. Système d'amortisseur à ressort selon la revendication précédente,
le ressort de support (32), le premier cylindre annulaire (11), le premier piston annulaire (12), le deuxième cylindre annulaire (21) et le deuxième piston annulaire (22) étant disposés de manière concentrique autour de l'axe longitudinal (L) du cylindre d'amortisseur (31).

3. Système d'amortisseur à ressort selon l'une des revendications précédentes,
le premier cylindre annulaire (11) et le premier piston annulaire (12) ainsi que le deuxième cylindre annulaire (21) et le deuxième piston annulaire (22) étant disposés de manière annulaire autour du cylindre d'amortisseur (31) et
le premier piston annulaire (12) étant rendu étanche par rapport au premier cylindre annulaire (11) et au cylindre d'amortisseur (31) et le deuxième piston annulaire (22) étant rendu étanche par rapport au deuxième cylindre annulaire (21) et au cylindre d'amortisseur (31).

4. Système d'amortisseur à ressort selon l'une des revendications précédentes, comportant en outre une soupape de descente (44) pour la descente rapide présentant une position de passage et une position de blocage, soupape à l'aide de laquelle le fluide peut être guidé hors de la première ou de la deuxième chambre de travail (13, 23) dans le réservoir de fluide (41), en contournant la pompe à fluide (42).

5. Système d'amortisseur à ressort selon la revendication 4 précédente,
la soupape de descente (44) présentant un ressort de rappel (441) pour le rappel par ressort et étant rappelée par ressort dans la position de passage dans un état non actionné.

6. Système d'amortisseur à ressort selon l'une des revendications précédentes,
le premier cylindre annulaire (11) et le deuxième cylindre annulaire (21) étant réalisés d'un seul tenant l'un avec l'autre et déterminant une chambre de cylindre commune dans laquelle le premier piston annulaire (12) et le deuxième piston annulaire (22) sont disposés.

7. Système d'amortisseur à ressort selon la revendication précédente,
la mobilité respective du premier piston annulaire (12) et du deuxième piston annulaire (22) dans la chambre de cylindre étant limitée par des butées de piston (51, 52) qui sont formées par le premier et/ou le deuxième cylindre annulaire (11, 21) ou sont fixées en position par rapport à ceux-ci.

8. Véhicule monovoie comprenant un système d'amortisseur à ressort selon l'une des revendications précédentes au niveau d'un essieu arrière du véhicule pour le réglage de la position de conduite du véhicule et pour la compensation d'une charge utile agissant sur le véhicule.
